# EUROPÄISCHE PATENTANMELDUNG

(11) **EP 3 968 631 A1**
(43) Veröffentlichungstag der Anmeldung: **16.03.2022**
(21) Anmeldenummer: 21000256.4
(22) Anmeldetag: 08.09.2021
(51) Int. Cl.: H04N 9/31, B60K 35/00, G02B 27/01, G03B 21/20

(54) **ANORDNUNG EINES OPTISCHEN PROJEKTIONSSYSTEMS ZUR ANWENDUNG AN UND/ ODER IN FAHRZEUGEN**

(30) Priorität: 09.09.2020 DE 102020005517
(71) Anmelder: Axion AG, 89264 Weissenhorn (DE)
(72) Erfinder: Mayer, Rolf, D 89155 Erbach (DE)
(74) Vertreter: Dziewior, Joachim

(57) **Zusammenfassung**

Das kaskadierbare Projektorensystem für Fahrzeuganwendungen basiert auf einem Konzept, bei dem zentrale Licht- und Informationsquellen vorliegen, wobei mittels eines Kabelsystems eine Verbindung zu Bildmodulatoren hergestellt wird. Bei diesem Patent handelt es sich um eine Entwicklung für vielfältige Anwendungen. Diese beinhaltet mindestens einen Bildmodulator sowie Licht- und Informationsquellen. Der Modulator besteht aus mindestens einem LCD (Liquid-Crystal Display) oder drei LCD bzw. DLP (Digital Light Processing) bzw. LCoS (Liquid Crystal on Silicon System) Systemen, wobei Optik und Projektionslinsen kombiniert werden. Eine Lichtquelle und ein Informationsmodul übertragen Licht- und Videosignale über ein Kabelsystem zum Bildmodul. Das Kabelsystem besteht aus Glasfaser-, Video,- und Spannungsversorgungskabeln in Kombination mit Hochleistungslichtquellenmodulen. Dies garantiert eine hochauflösende Videoprojektion.

## Beschreibung

Diese Erfindung bezieht sich auf ein Fahrzeug-Projektoren-System, welches über eine zentrale Licht- und Informationsquelle verfügt und mittels einem Kabelsystem mit Bildmodulatoren verbunden ist. Bei dem Lichtmodul handelt es sich zum Beispiel um einen Hochleistungslaser oder eine LED mit einer glasfasergekoppelten Quelle. Es überträgt Licht über ein Glasfaserkabel zum kaskadierbaren Bildmodulator. Auf diese Weise kann eine hochauflösende Videoprojektion auf verschiedenen Oberflächen im Fahrzeuginterieur oder -exterieur realisiert werden.

### Hintergrund der Erfindung

Jüngste Entwicklungen in der Automobilindustrie zeigen auf, dass viele Unternehmen versuchen, Projektoren, Glasprojektionssysteme oder aktive Logoprojektoren in Fahrzeuge zu integrieren. Gleichzeitig schreitet die Technologie im Bereich der Projektorenentwicklung weiter voran. RGB-(Red, Green, Blue)Laser und LED (Light Emitted Diode) basierte Projektoren werden als Lichtquellen verwendet. Das Hauptziel dieses Patents besteht darin, ein zentrales, kaskadierbares Projektorensystem in einem Fahrzeug zu integrieren, wobei der Projektor-Bild-Modulator Projektionsdaten und licht von einer zentralen Quelle empfängt. Projektionsmodulatoren können an beliebigen Stellen im Fahrzeug installiert werden, wie etwa in Türen, der Heckscheibe, der Windschutzscheibe oder am Dach. Auch können diese am Fahrzeugexterieur angebracht werden, etwa an linken und rechten Fahrzeugseite, rechts und links an den Seitenspiegeln oder an der Front- bzw. Heckstoßstange.

### Zusammenfassung der Erfindung

Die dargestellte Erfindung beinhaltet ein Konzept, bei dem das Projektorensystem zwei separate Teile aufweist: einen kaskadierbaren Projektor-Bild-Modulator sowie ein Licht- und Informationsmodul. Projektor-Bild-Modulatoren können an beliebiger Stelle im Interieur/Exterieur eines Fahrzeugs installiert werden. Beispielsweise kann die Projektion auf der Windschutzscheibe als Instrumententafel genutzt werden. Eine Frontvideokamera kann die Daten zu dem Projektor in der Heckscheibe übertragen, um Informationen von der Kamera darzustellen.

Das Modulator-System kann im Fahrzeugexterieur installiert werden, etwa auf der Front- oder Heckstoßstange, um Verkehrs- oder Notsignale anzuzeigen. Die Informations- und Lichtquelle ist ein zentrales Modul, welches separat von den kaskadierbaren Projektor-Bild-Modulatoren zu betrachten ist. Das Modul besteht aus LED- oder Laserlichtquellen, einem Strahlenteilungssystem und einem Computer. Der Computer dient dazu, Videosignale zu den Projektoren zu übertragen, die Eingangsleistung und Datenquellen zu kontrollieren sowie mit dem Bordcomputer des Fahrzeuges zu kommunizieren. Die Verbindung zwischen einem zentralen Modul und Projektor-Bild-Modulatoren wird durch ein Kabelsystem realisiert, welches aus Glasfaser-, Video-, Audio-, und Spannungsversorgungskabeln besteht.

### Kurzbeschreibung der Abbildungen

Abb. 1 ist eine schematische Darstellung einer zentralen Licht- und Informationsquelle, verbunden mit dem kaskadierbaren Projektorsystem.
Abb. 2 ist eine Querschnittsdarstellung eines Verbindungskabels als Kombination von Glasfaser-, Video- und Spannungsversorgungskabel.
Abb. 3 ist eine schematische Darstellung eines Fahrzeuges mit einer zentralen Licht- und Informationsquelle, zusammen mit einem kaskadierbaren Projektorsystem, welches an unterschiedlichen Stellen im Fahrzeug untergebracht ist.
Abb. 4 ist eine Draufsichtdarstellung mit einer zentralen Licht- und Informationsquelle, kombiniert mit einem kaskadierbaren Projektorsystem, welches an unterschiedlichen Stellen im Fahrzeug untergebracht ist. Außerdem ist ein Plugin-Projektor-Modul auf der Rückseite dargestellt.
Abb. 5 ist eine schematische Draufsichtdarstellung eines Fahrzeuges, welches mit einer zentralen Licht- und Informationsquelle ausgestattet ist, kombiniert mit einem kaskadierbaren Projektorsystem, welches an unterschiedlichen Stellen im Fahrzeug untergebracht ist.
Abb. 6 ist eine schematische Draufsichtdarstellung eines Fahrzeuges, welches mit einer zentralen Licht- und Informationsquelle ausgestattet ist, zusammen mit einem kaskadierbaren Projektorsystem, welches auf der Front- und Heckstoßstange installiert ist und Verkehrs- sowie Notsignale anzeigt.
Abb. 7 ist eine schematische Darstellung einer zentralen Licht- und Informationsquelle, verbunden mit einem kaskadierbaren Projektorsystem, positioniert auf der Türe an unterschiedlichen Positionen.
Abb. 8 ist eine schematische Darstellung einer zentralen Licht- und Informationsquelle, verbunden mit einem kaskadierbaren Projektorsystem, positioniert auf der Scheibe und auf einem Seitenspiegel.
Abb. 9 ist eine schematische Darstellung eines Fahrzeuges mit zentraler Licht- und Informationsquelle, kombiniert mit einem Kamerasystem zur Informationsdarstellung von Nutzerdaten auf der Fahrzeugrückseite oder den Seitenwänden eines LKWs.

### Detaillierte Beschreibung der Erfindung

Während den letzten Jahren ist die technologische und industrielle Entwicklung stark fortgeschritten. Die Gesellschaft versucht mittels Technologie überall, ob zu Hause oder in Fahrzeugen, das Leben komfortabel, sicher und zugänglich zu gestalten. Projektionssysteme finden in der Automobilindustrie eine breite Anwendung, insbesondere als Logoprojektion oder als Instrumententafelsystem. Fortschritte in den Bereichen Halbleitertechnologie und Nanotechnologie haben große Veränderungen bei Licht- und Displaysystemen ermöglicht. Unter anderem, die Projektorengröße zu reduzieren und gleichzeitig die Auflösungsqualität zu erhöhen.

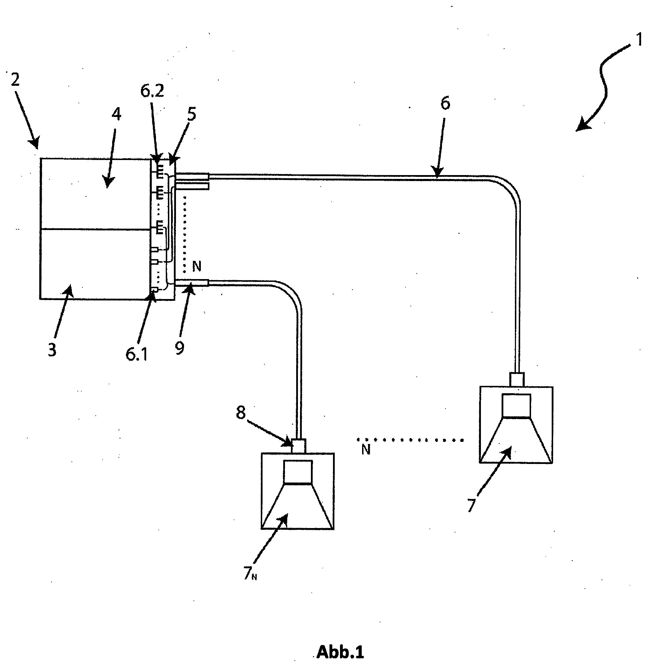

-Gegenstand dieses Patents ist ein Projektorensystem 1 in einer Fahrzeuganwendung, in der die Licht- und Informationsquelle 2 zentral und separiert von den Bildmodulatoren ist. Dies wird schematisch in Abb. 1 dargestellt. Es handelt sich hierbei um ein Konzept, bei dem sich ein zentrales Lichtmodul 3, ein zentrales Kontrollsystem 4 mit dem Hub 5 verbinden, welches Video- und Lichtsignale in einem Kabel kombiniert und diese in verschiedene Ausgangskanäle 9 teilt. Danach wird das Signal über das Kabelsystem 6 in jeden Bildmodulator 7 weitergeleitet, verbunden über Steckverbindungen 8.

Das Lichtmodul 3 besteht aus mindestens einer Lichtquelle, mindestens einem optischen System und mindestens einer Strahlenteilungseinheit. Die Lichtquelle kann beispielsweise Weißlicht, RGB-Laser oder LED sein. Das optische System kombiniert beispielsweise RGB-Farb-Strahler, indem es ein Prismen-System nutzt, um weißes Licht zu erzeugen. Austretendes Licht gelangt zum Strahlenteiler, dieser teilt weißes Licht auf. Abhängig von den Spezifikationen und den Anforderungen an den Projektor kann der Lichtstrahl in mehrere Anteile unterteilt werden. Der individuelle Beam wird durch ein zentrales Lichtmodul 3 mit Glasfaseranschluss 6.1 im Hub 5 erzeugt.

Demgegenüber generiert das zentrale Kontrollsystem 4 die Information (jedwede Bild-, Video-, Textinformation) und überträgt dieses Signal durch mindestens eine Verbindung 6.2 in den Hub 5. Das zentrale Kontrollsystem 4 kontrolliert zudem die Spannungsversorgung, welche das zentrale Lichtmodul 3 und Bildmodulatoren 7 speist. Es handelt sich hierbei um das Hauptinformationszentrum, welches Informationen beispielsweise via Bluetooth, WiFi und USB oder vom Bordcomputer des Fahrzeuges erhalten kann und diese über mindestens eine Verbindung 6.2 überträgt. Die Verbindung zum Bordcomputer des Fahrzeugs ermöglicht die Projektion von Fahrzeuginformationen wie beispielsweise der Reichweite an beliebigen Stellen innerhalb oder außerhalb des Fahrzeugs.

Während dem Tankvorgang 10 wird beispielsweise oberhalb der Scheibe über den Tankinhalt informiert. Eine mögliche Kaskadenschaltung zwischen dem zentralen Projektoren-System 2 und dem Bordcomputer des Fahrzeugs besteht beispielsweise darin, Verkehrs- oder Notfallschilder auf der Projektionsoberfläche außerhalb des Fahrzeugs abzubilden. Beispielsweise kann dies auf der Straße zwischen Front und Heck des Fahrzeuges durch Bild-Modulatoren 7 erfolgen, welche auf Front- und Heckstoßstange montiert werden.

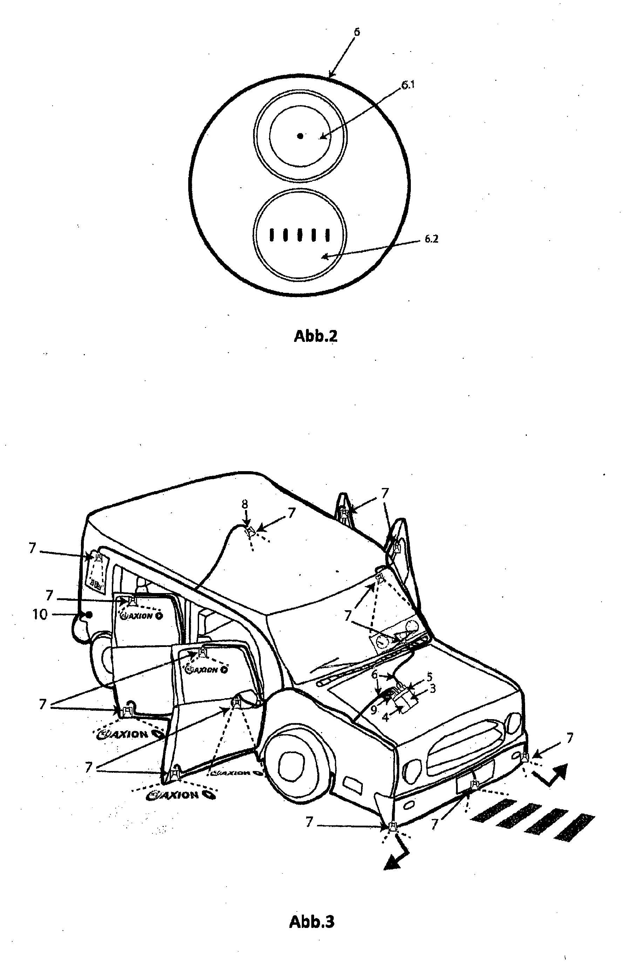

Im Hub 5 werden Video-, Glasfaser- und Spannungsversorgungskabel in 9 zusammengeführt und mit dem Bildmodulator 7 über ein Kabelsystem 6 verbunden. Abb. 2 stellt eine Querschnittsdarstellung des Kabelsystems 6 dar, welches Glasfaser- 6.1, Videosignal- und Spannungsversorgungskabel 6.2 umfasst. Jeder Bildmodulator 7 hat einen Eingangskanal 8, welcher mit dem Kabelsystem 6 verbunden wird.

Das zentrale Projektoren-System 2 kann mehrere Bildmodulatoren 7 unterstützen, wobei jeder Bildmodulator 7 individuelle Videosignale unterschiedlicher Auflösungen wie beispielsweise XGA (1024 x 768), WXGA (1280 x 800), HD (1920 x 1080) oder 4K (4096 x 2160) empfangen und projizieren kann. Ein Bildmodulator 7 besteht aus einem System aus einem LCD (Liquid-crystal display) oder drei LCDs, DLP (Digital Light Processing) oder LCoS (Liquid Crystal on Silicon) Systemen, wobei Optiken und Projektionslinsen kombiniert werden. Das System 2 kann an beliebiger Stelle im Fahrzeug angebracht werden, z. B. unter der Motorhaube oder im Kofferraum.

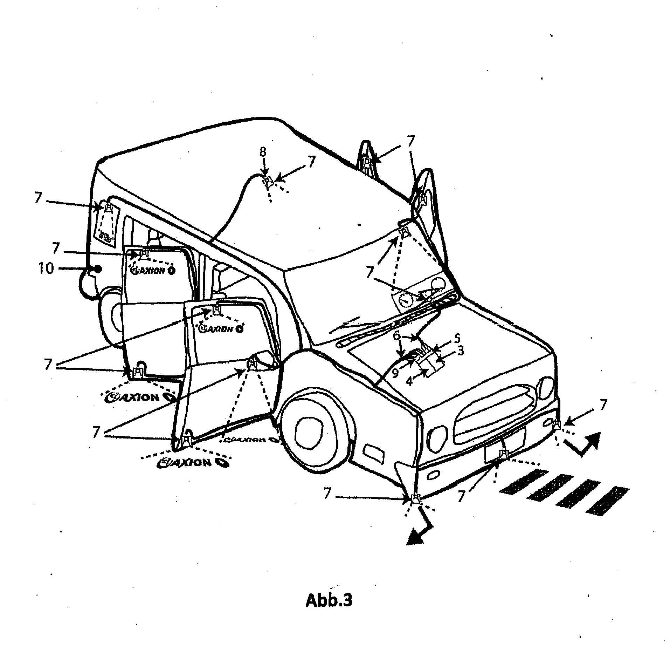

Abb. 3 zeigt das zentrale Lichtmodul 4 und die Informationsquelle 3 zusammen mit den kaskadierbaren Projektions-Bildmodulatoren 7 an unterschiedlichen Stellen im Fahrzeug (Interieur/Exterieur). In dieser Darstellung ist das zentrale Projektorensystem 2 unter der Motorhaube des Fahrzeuges angebracht und mit dem kaskadierbaren Bildmodulator-System 7 durch ein Kabelsystem 6 verbunden. Dieses Konzept berücksichtigt auch die Möglichkeit, zusätzliche Bildmodulatoren 7 zu integrieren, indem ein Plugin-Port mit Verbindungen 8 und 9 genutzt wird.

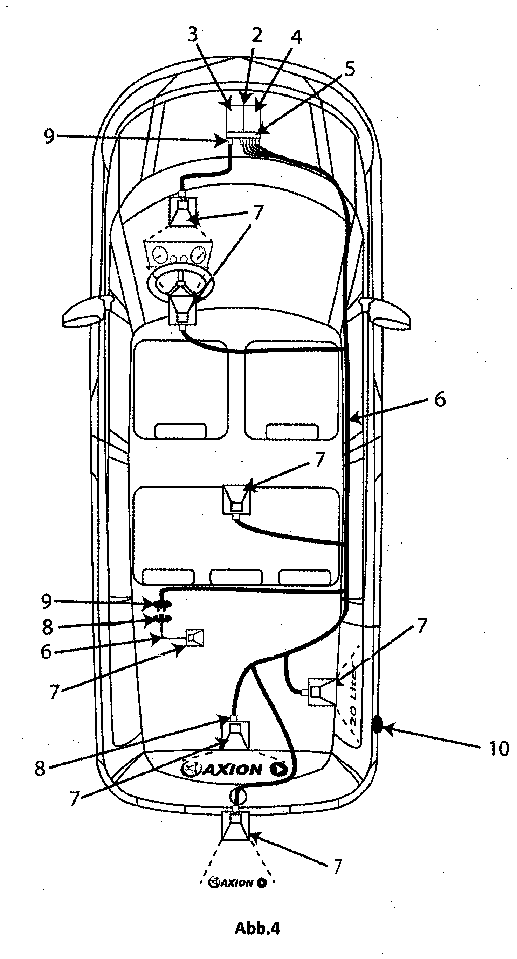

Abb. 4 veranschaulicht diese Plugin-Option eines zusätzlichen portablen Projektors. Diese Option kann beispielsweise für Projektionen außerhalb des Fahrzeugs beispielsweise bei Wohnmobilen genutzt werden, um separate Bildmodulatoren 7 zu verbinden.

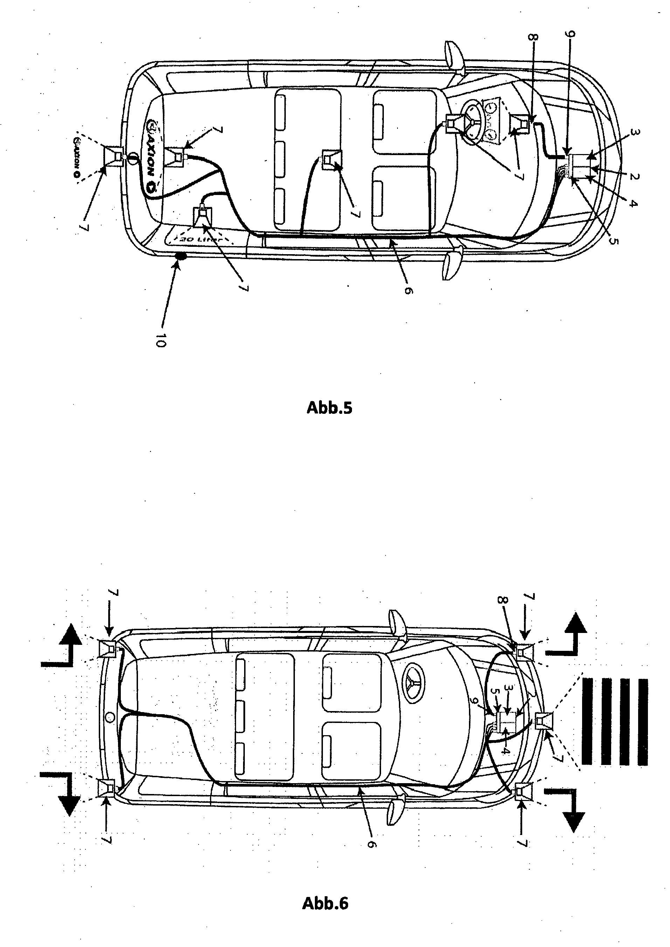

Abb. 5 zeigt ein Beispiel eines Systems 2 in einer Fahrzeug-Anwendung, wobei das Kabelsystem 6 mit Bildmodulatoren 7 verbunden ist, welche sich auf der Windschutzscheibe, dem Fahrzeughimmel, der Heckstoßstange, der Heckscheibe und der oberhalb des Tanks 10 gelegenen Scheibe befinden. Die Bildmodulatoren 7 auf der Windschutzscheibe können beispielsweise an zwei Positionen installiert werden. Beide arbeiten wie eine Instrumententafel. In modernen Fahrzeugen wird die Instrumententafel aktiv genutzt, um etwa das Tachometer, die Tankanzeige und den Kilometerzähler abzubilden. Der Bildmodulator 7 am Fahrzeughimmel kann beispielsweise hochauflösende Videos auf beliebigen Oberflächen im Fahrzeuginterieur darstellen.

Ein Patentanspruch wird in Abb. 6 in Form des zentralen Projektorensystems 2 mit einem kaskadierbaren Bildmodulator 7 dargestellt, welcher auf der Front- und Heckstoßstange angebracht ist und dort Verkehrs- und Notfallsignale auf der Straße darstellt.

Der Bildmodulator 7 kann genutzt werden, um verschiedenste Informationen auf den Seitenscheiben des Fahrzeuges darzustellen. Weiterhin ist ein tragbarer, kompakter Projektor Gegenstand dieses Patents.

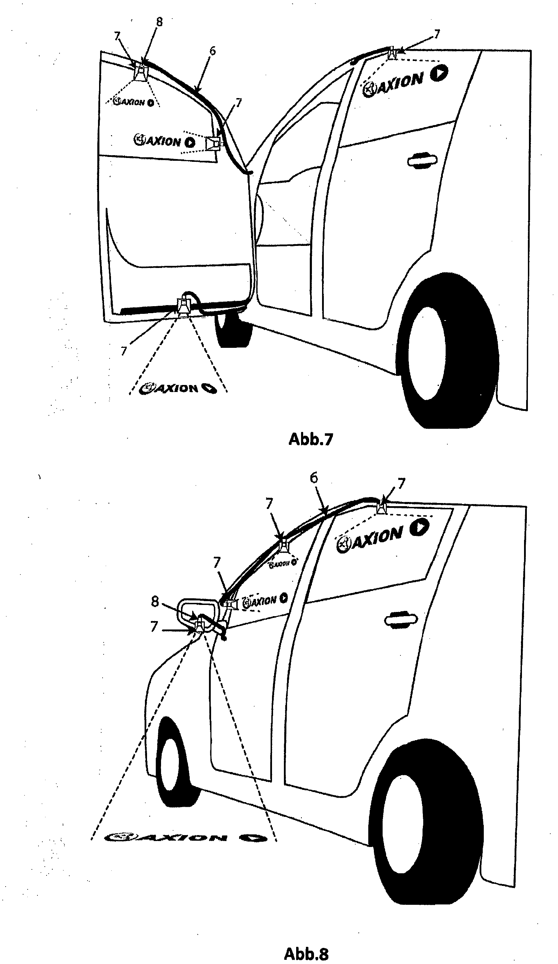

Abb. 7 und Abb. 8 stellen schematisch Bildmodulatoren auf den Seitenscheiben, den Seitenspiegeln sowie an der Türunterseite dar. Das zentrale licht- und informationsquellenbasierte, kaskadierbare Projektorensystem 1 ist ein Informations- und Projektionsnetzwerk, um eine hochauflösende Projektion auf verschiedenen Oberflächen zu ermöglichen. Ein sehr kompakter Bildmodulator 7 kann an beliebigen Stellen in oder am Fahrzeug mit separater Informationsquelle 3 und Lichtquelle 4 implementiert werden. Der moderne Projektor besitzt eine hohe Auflösung, welche beispielsweise auf Laser- oder LED-Lichtquellen basiert. Laser und LED erzeugen viel Hitze und müssen daher gekühlt werden.

Ein Patentanspruch besteht darin, dass das System 2 mit dem Bildmodulator 7 über das Kabelsystem 6 verbunden werden kann. Diese räumliche Trennung vermeidet sowohl thermische Probleme und Platz- bzw. Bauraumrestriktionen.

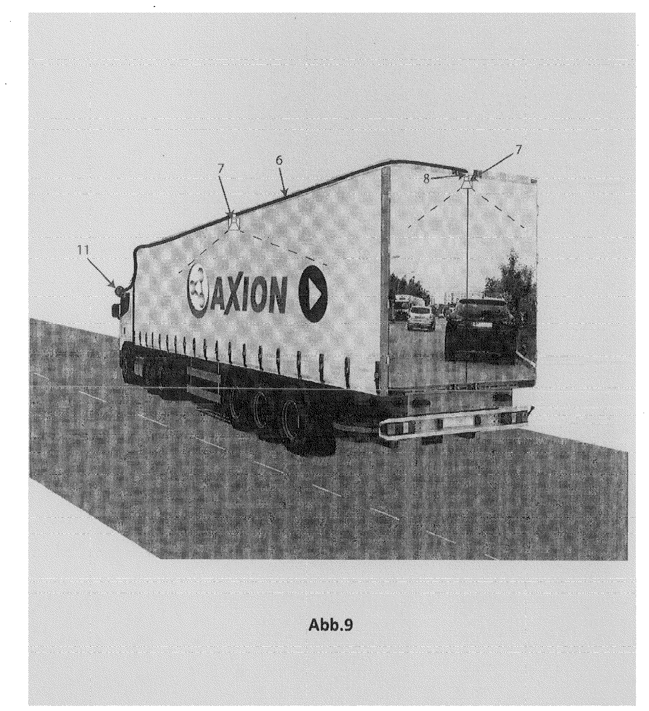

Auf Straßen und Autobahnen ist die Sicht für den nachfolgenden Verkehr häufig durch vorausfahrende LKWs eingeschränkt. In diesem Fall kann das kaskadierbare Projektorensystem 1 mit dem Video-Kamerasystem synchronisiert werden und das Videosignal kann auf die Rückseite des LKW projiziert werden. Eine schematische Darstellung dieses Patentanspruchs ist in Abb. 9 dargestellt, in der Bildmodulator 7 das Videosignal vom Kamerasystem 11 auf die Fahrzeugrückseite des LKWs projiziert. Das Kamerasystem 11 zeigt die Verkehrssituation vor dem LKW und informiert den nachfolgenden Verkehr darüber.

Eine weitere Applikation wäre beispielsweise die Projektion von Werbung auf den Seitenwänden eines LKWs. Das oben beschriebene zentrale licht- und informationsquellenbasierte kaskadierbare Projektorensystem ist eine Technologie für beliebige Fahrzeugtypen wie beispielsweise PKW, Bus, Tram, Trolleybus, S-Bahn, Zug, Transportfahrzeuge, LKW, Motorräder, Traktoren, Sattelschlepper, Flugzeuge, Helikopter, Schiffe, Motorbote und vergleichbare Fahrzeuge.

## Patentansprüche

1. Anordnung eines optischen Projektionssystems zur Anwendung an und/oder in Fahrzeugen, insbesondere Kraftfahrzeugen, bestehend aus wenigstens einem Lichtmodul (3) sowie einem Projektionsmodul, die von einem Kontrollsystem (4) angesteuert und von einer Energiequelle versorgt werden, wobei das Lichtmodul (3) und das Kontrollsystem (4) als zentrale Einheit ausgebildet und über ein Kabelsystem (6) angesteuert und verbunden sind.

2. Anordnung nach Anspruch 1, **dadurch gekennzeichnet, dass** das Lichtmodul (3) eine Lichtquelle aufweist, die wahlweise mit einem Lichtstrahlsplitter bzw. -teiler, Ausgangskanälen zum Anschluß für Glasfaserkabel sowie Kühlungselementen versehen sein kann.

3. Anordnung nach Anspruch 1 oder 2, **dadurch gekennzeichnet, dass** das Kontrollsystem (4) eine Recheneinheit in Form eines Computers, eines Mikroprozessors oder dergleichen beinhaltet, die Informationen empfängt, generiert und speichert und daraus gebildete Daten zu dem Lichtmodul (3) bzw. Projektionsmodul überträgt, wobei die Recheneinheit eine Informationseingangsschnittstelle zur Kommunikation mittels WiFi, Bluetooth, einer App oder dergleichen aufweist.

4. Anordnung nach Anspruch 1, **dadurch gekennzeichnet, dass** das Lichtmodul (3) sowie das Projektionsmodul als kaskadierbares System ausgebildet sind, wobei das Projektionsmodul einen Bildmodulator (7) und/oder eine Bilderzeugungseinheit, sowie kombinierte Optiken und Projektionslinsen umfaßt.

5. Anordnung nach einem der vorangehenden Ansprüche, **dadurch gekennzeichnet, dass** das/die Projektionsmodul(e) sowohl im Inneren wie auch im Äußeren eines Fahrzeuges installiert und dazu beispielsweise in den Fahrzeugtüren, links oder rechts an den Außenspiegeln oder der Heckscheibe angeordnet sein können.

6. Anordnung nach einem der vorangehenden Ansprüche, **dadurch gekennzeichnet, dass** die Energiequelle eine Eingangsspannung im Bereich 9-54 V aufweist und eine Ausgangsleistung von 100 W generiert.

7. Anordnung nach einem der vorangehenden Ansprüche, **dadurch gekennzeichnet, dass** das Kabelsystem (6) Glasfaser-, Video- und Spannungsversorgungskabel in einem Kabel umfasst und zudem eine Verbindungsmöglichkeit (Plug-in-Option) zu dem Projektionsmodul, auch portabel, bereitstellt.

8. Anordnung nach einem der vorangehenden Ansprüche, **dadurch gekennzeichnet, dass** das Licht von einem direkt weißes Licht emittierenden Modul oder einem Modul mit rot/grün/blau- (RGB) Farbkombination generiert wird, wobei es sich bei der Lichtquelle beispielsweise um LED- oder Lasermodule handelt.

9. Anordnung nach einem der vorangehenden Ansprüche, **dadurch gekennzeichnet, dass** der Bildmodulator (7) oder die Bilderzeugungseinheit aus einem LCD, drei LCDs, DLP oder LCoS Systemen besteht.

10. Fahrzeug mit mindestens einem zentralen kaskadierbaren Licht- und Projektorensystem entsprechend den Ansprüchen 1 bis 9.

11. Applikation von mindestens einem zentralen kaskadierbaren Licht- und Projektorensystem entsprechend einem der Ansprüche 1 bis 9 in einem Fahrzeug.
